# EUROPÄISCHE PATENTSCHRIFT

(11) **EP 2 259 007 B1**
(45) Veröffentlichungstag und Bekanntmachung des Hinweises auf die Patenterteilung: **21.11.2012**
(21) Anmeldenummer: 10164162.9
(22) Anmeldetag: 27.05.2010
(51) Int. Cl.: G01B 1/00, G01B 3/06, B29C 45/00

(54) **Massstabglied aus thermoplastischem Kunststoff und Gliedermassstab**
Thermoplastic folding ruler and element thereof
Articulation de règle graduée en matière synthétique thermoplastique et mètre pliant

(30) Priorität: 28.05.2009 CH 8202009
(43) Veröffentlichungstag der Anmeldung: 08.12.2010
(73) Patentinhaber: Kunststoffwerk AG Buchs, 9470 Buchs (CH)
(72) Erfinder: Dr.-Ing. Müller, Norbert, 94032 Passau (DE); Riedmann, Gerhard, 6840 Götzis (AT); Dipl. Wirt.-Ing. (FH) Rudolph, Martin, 6714 Nüziders (AT)
(74) Vertreter: Hasler, Erich

(56) Entgegenhaltungen:
- DE-A1- 2 635 748
- DE-C1- 4 442 875
- US-A- 3 490 148
- US-A- 4 900 499
- US-A- 5 095 632
- US-A- 6 010 656

## Beschreibung

Die vorliegende Erfindung betrifft ein Massstabglied aus thermoplastischem Kunststoff gemäss Oberbegriff von Anspruch 1, einen Gliedermassstab gemäss Oberbegriff von Anspruch 14, sowie ein Verfahren zur Herstellung eines Massstabglieds gemäss Oberbegriff von Anspruch 15.

Massstabglieder aus thermoplastischem Kunststoff werden durch geeignete Gelenkvorrichtungen zu Gliedermassstäben mit beliebiger Länge kombiniert. Solche Kunststoff-Gliedermassstäbe haben den bekannten Nachteil, dass sie sich im Vergleich zu Ausführungen im Holz wesentlich stärker durchbiegen, wenn der Glieder-Massstab aufgefaltet ist. Diese Eigenschaft von Kunststoff-Gliedermassstäben ist bei Handwerkern äusserst unbeliebt. Sie verwenden daher gerne die altbekannten und bewährten Holz-Gliedermassstäbe. Diese zeichnen sich durch ein geringes Gewicht, geringe Durchbiegung und eine anfangs gute Gelenkgängigkeit aus, was sich in einer vorteilhaften Biegesteifigkeit des aufgefalteten Massstabes äussert. Holz-Gliedermassstäbe haben allerdings den Nachteil, dass sie im Gebrauch leicht brechen, dass die Gelenkfestigkeit nachlässt und die auf die Massstabglieder aufgebrachte Messskala durch Abnutzung mit der Zeit unleserlich wird.

Der Vorteil von Kunststoff-Gliedermassstäben liegt in ihrer geringen Bruchgefahr und einer wesentlich längeren Sichtbarkeit einer aufgebrachten, z.B. heissgeprägten Messskala

Aus der EP-A-0878689 ist ein im Spritzgussverfahren hergestellter Gliedermassstab aus zwei Kunststoff Komponenten mit unterschiedlicher Härte oder Elastizität bekannt. Das 4-stufige Herstellungsverfahren ist jedoch sehr aufwendig und die Biegesteifigkeit, welche sich in im Gebrauch störend durch Verbiegung des voll geöffneten Gliedermassstabes äussert, ist trotz der 2 Kunststoffkomponenten, die besonders für die Ausbildung und die Beanspruchung der Gelenkanordnungen eingesetzt werden, ungenügend.

Die DE 44 42 875 beschreibt einen Gliedermassstab bestehend aus Gliedern, die eine innere härtere Materialkomponente aufweisen, die von Schichten aus einer Komponente mit besonderes weichen und elastischen Eigenschaften umgeben ist. Die innere Materialkomponente kann aus einem glasfaserverstärkten Polyamid - Kunststoff bestehen. Der Gliedermassstab besitzt den Vorteil, dass er durch die äusseren weichen Schichten unempfindlich gegenüber äusseren Umgebungseinflüssen ist und gleichzeitig eine gewisse Stabilität aufweist. Die innere härtere Materialkomponente weist jedoch selbst bei der Verwendung von einem glasfaserverstärkten Polyamid - Kunststoff ungenügende Biegesteifigkeit im Vergleich zu Holz-Gliedermassstäben auf. Dies liegt daran, dass bei einer Verbiegung des Gliedermassstabs die Zugspannungen mit steigendem Abstand von Kernbereich zunehmen. In den Bereichen, in welchen die höchsten Zugspannungen auftreten, weist der Gliedermassstab jedoch geringe Biegefestigkeiten auf, da er dort durch die äussere weichere Materialkomponente geschwächt ist.

Die DE 26 35 748 bezieht sich ebenfalls auf einen Gliedermassstab, bei welchem die Glieder hohl sind. Die Hohlräume können mit geschäumtem, glasfaserverstärktem Kunststoff gefüllt sein. Das nachträgliche Befüllen der Hohlräume ist jedoch aufwendig und verbessert die Biegesteifigkeit der Hohlprofile nur unwesentlich.

Die US 3,490,148 beschreibt einen Gliedermassstab, bei dem die einzelnen Glieder aus Kunststoff sein können. Auch können die Glieder aus einem glasfaserverstärkten Kunststoff hergestellt sein, um den E-Modul der Glieder zu erhöhen. Der Gliedermassstab besteht jedoch nur aus einer einzelnen Schicht, was zu ungenügenden Biegesteifigkeitswerten führt.

Aufgabe der vorliegenden Erfindung ist es deshalb, Einzelglieder für einen Gliedermassstab anzubieten, welche sich durch Biegesteifigkeiten auszeichnen, die derjenigen eines Holz-Gliedermassstabes gleichen, jedoch ohne dessen hohe Bruchgefahr aufzuweisen.
Ein weiteres Ziel ist es, Massstabglieder zur Verfügung zu stellen, bei welchen beliebige aufgebrachte Informationen, zum Beispiel eine Messskala, Schriftzüge oder Werbedarstellungen, abriebfest und besonders haltbar sind.

Erfindungsgemäss wird die Aufgabe durch ein Massstabglied gemäss Oberbegriff von Anspruch 1, dadurch gelöst, dass zur Verbesserung der Biegesteifigkeit das Massstabglied an den oder knapp unter den Oberflächen der Flachseiten des Massstabglieds eine in Längsrichtung verlaufende Faserverstärkung mit Fasern einer Mindestlänge von wenigstens 15 mm in Gestalt von Lagen aufweiset, welche Lagen zueinander beabstandet und durch eine Kernschicht miteinander verbunden sind. Als Deckschichten im Rahmen der vorliegenden Erfindung sind Lagen anzusehen, die sich an der oder knapp unter der Oberfläche der Flachseiten erstrecken. Dabei sind die Deckschichten in der Regel durch eine Informationsschicht, die die Skale des Masstabglieds wiedergibt, abgedeckt. Von Bedeutung ist, dass die Lagen der Langfaserschichten zueinander beabstandet sind. Dadurch wird die Biegesteifigkeit des Massstabglieds deutlich verbessert. Bei Biegebeanspruchungen des Massstabglieds treten die Zugspannungen in Längsrichtungen auf. Die in Längsrichtung orientierten Fasern sind auf Zug beanspruchbar und nehmen daher die auftretenden Zugspannungen auf. Das erfindungsgemässe Massstabglied besitzt eine Biegesteifigkeit in Längsrichtung, welche im Wesentlichen derjenigen von Holz-Gliedermassstäben entspricht. Denkbar ist, dass Langfasern im gesamten Volumen, d.h. auch zwischen den Deckschichten vorgesehen sind. Ein weiterer Vorteil des erfindungsgemässen Massstabglieds ist, dass durch den gewählten Aufbau auch kostengünstig am Markt erhältliche Kunststoffe einsetzbar sind.

In einer bevorzugten Ausführungsform ist die Faserverstärkung durch ein bevorzugt mehrheitlich unidirektionales Fasergewebe oder durch in Längsrichtung ausgerichtete Rovingstränge gebildet. Die Rovingstränge bzw. das Fasergewebe sind in einer Kunststoffmatrix, vorzugsweise Thermoplasten eingebettet. Durch die im Wesentlichen unidirektionale Ausrichtung der Rovingstränge bzw. des Fasergewebes in einer bevorzugten Richtung, können diese an die jeweiligen Belastungszustände angepasst werden. Bei einer Verbiegung des Massstabglieds liegen die Spannungsspitzen der Zug- bzw. Druckbelastungen in den Randzonen und somit in den Deckschichten des Massstabglieds. Da die Rovingstränge bzw. das Fasergewebe in den Deckschichten angeordnet sind, wirken deren hervorragende Zugfestigkeiten genau an den Stellen, wo die Zugkräfte, hervorgerufen durch eine Verbiegung, am grössten sind. Die Kunststoffmatrix dient der Aufnahme der Druckspannungen, welche bei einer Verbiegung an der gegenüberliegenden Seite der Zugspannungen entstehen. Dadurch ergibt sich eine besonders hohe Biegesteifigkeit des Massstabglieds.

Als Fasergewebe können beispielsweise sogenannte Organobleche zum Einsatz kommen. Als Organobleche werden im Allgemeinen im Wesentlichen plattenförmige Halbzeuge aus faserverstärkten, thermoplastischen Kunststoffen verstanden. Damit die Organobleche mit der Kernschicht einen guten Haftverbund eingehen, ist es denkbar, dass die Kernschicht aus demselben Material besteht, wie die Kunststoffmatrix des Organoblechs. Da Organobleche Faserverbundhalbzeuge sind, besitzen sie den Vorteil, dass sie durch ihren Aufbau hohe Zug - und Druckfestigkeiten mit einem geringen Gewicht vereinbaren. Wie schon weiter oben ausgeführt, nehmen bei einer Verbiegung eines Massstabglieds die Längsfasern des Organoblechs die Zugkräfte auf, wohingegen die Matrix zusammen mit der Kernschicht der Aufnahme der Druckkräfte dient.

Zweckmässigerweise sind die Längen der Fasern der Deckschichten im Wesentlichen entlang der Längserstreckung des Massstabglieds orientiert. Die Länge der längserstreckten Fasern entspricht vorzugsweise wenigstens zu 30%, und ganz besonders bevorzugt zu 90% der Länge des Massstabglieds. Die Fasern sind daher genau in Richtung der Zugkräfte orientiert, welche bei einer Verbiegung des Massstabglieds auftreten. Die Zugkräfte können folglich von den Fasern optimal aufgenommen werden. Dies führt zu einer Biegesteifigkeit des Massstabglieds, welche mit derer von Massstabgliedern aus Holz vergleichbar ist.

In einem bevorzugten Ausführungsbeispiel beträgt der volumenmässige Faseranteil der Deckschichten, welcher sich in Längsrichtung des Massstabglieds erstreckt, 65% bis 95%, bevorzugt 70% bis 90% und besonders bevorzugt 75% bis 85% des Gesamtfaservolumens der Langfasern in den Deckschichten. Die Fasern bilden ein Fasergewebe aus Längsfasern und Querfasern. Dadurch, dass ein grosser Anteil der Fasern in Längsrichtung orientiert ist, sind die Zugfestigkeiten der Deckschichten sehr hoch. Der verbleibende Anteil der Fasern ist vorzugsweise orthogonal zu den Längsfasern ausgerichtet, damit diese zusätzlich zu der Matrix aneinandergehalten sind und ein gleichmässiger linearer Faserverlauf der Längsfasern gegeben ist. Für die Zugfestigkeit der Deckschichten besitzen die Querfasern jedoch nur untergeordnete Bedeutung.

Das erfindungsgemässe Massstabglied hat die Form eines flachen Stabes, der an einem oder an beiden Enden die für die Gelenkfunktionen zum Aufklappen eines Gliedermassstabes notwendigen Anordnungen, beispielsweise Vertiefungen oder Noppen, aufweist. Er besteht aus einer im Spritzgussverfahren hergestellten Sandwich- oder Mehrschicht-Verbund- bzw. Integralschaumstruktur aus zwei Deckschichten, einer Kernschicht und wahlweise einer Informationsschicht, die vorzugsweise bedruckt oder geprägt ist.

Zwischen den Deckschichten ist eine Kernschicht vorgesehen. Die Deck- und Kernschichten bestehen vorteilhaft aus dem gleichen thermoplastischen Kunststoff. Bei Verwendung von gleichen Kunststoffen ergibt sich zweckmässigerweise eine besonders gute und haltbare Verbindung zwischen den Deckschichten und der Kernschicht.

Bevorzugte Kunststoffe sind Polyamid, Polycarbonat, oder Polystyrol und besonders bevorzugt Polypropylen, da Polypropylen ein niedriges spezifisches Gewicht besitzt und günstig in der Herstellung ist.

In besonderen Ausführungsformen ist der Kunststoff der Kernschicht zur Gewichtsreduktion des Massstabgliedes geschäumt und kann ausserdem durch Masterbatch pigmentiert sein.

Die hohe Biegesteifigkeit des Massstabgliedes wird mit Vorteil dadurch erreicht, dass die Faserverstärkung der Deckschichten aus Fasern aus der Gruppe der Glasfasern, Aramidfasern oder Carbonfasern sind. Denkbar sind jedoch auch andere Fasern, deren Zugfestigkeiten vorstehenden Fasern entsprechen.

Die Kernschicht ist vorteilhaft mit Kurzschnittfasern, vorzugsweise mit einer Länge zwischen 1 und 3 mm, versetzt. Der gewichtsmässige Anteil der Kurzschnittfasern liegt zwischen 0.1 bis 40 Gew. %, vorzugsweise zwischen 10 bis 30 Gew.% und besonders bevorzugt zwischen 15 bis 25 Gew.% des Gesamtgewichts der Kernschicht. Die Kernschicht ist daher in ihrer Herstellung günstiger als die zwei Deckschichten. Die Kernschicht weist für die im Kernbereich reduziert auftretenden Druck- und Zugbelastungen eine ausreichende Biegesteifigkeit auf.

Zweckmässigerweise sind vorgefertigte Deckschichten eingesetzt. Der Faseranteil in den vorgefertigten Deckschichten liegt vorzugsweise zwischen 20 und 80 Vol.-% und vorteilhaft zwischen 40 und 60 Vol.-%. Durch dieses Volumenverhältnis sind in den Deckschichten einerseits ausreichend Längsfasern vorhanden, um Zugkräfte, welche bei Verbiegung des Massstabglieds auftreten, aufzunehmen. Andererseits ist ein ausreichender Volumenanteil durch die Kunststoffmatrix abgedeckt, um die Fasern zu verbinden und eine auseichende Druckstabilität der Deckschichten zu gewährleisten.

Es erweist sich als vorteilhaft, wenn die Faserverstärkung der Deckschichten zumindest teilweise aus Fasermaterialien bestehen, die in thermoplastischen Kunststoffen vorkonsolidiert sind. Die Deckschichten sind demnach einfach auf die Form des Massstabglieds zuschneidbar.

Vorteilhaft ist der Kunststoff der Kernschicht pigmentiert. Dadurch kann das Massstabglied eine Farbgebung erhalten, welche einen gleichmässigen Untergrund im Kernmaterial darstellt.

Die Informationsschicht aus bedruckbarem oder prägbarem, vorteilhaft polymerem Material liegt zweckmässigerweise auf der jeweiligen Deckschicht. In besonderen Ausführungsformen liegt die Informationsschicht in oder unterhalb der Deckschicht. Dies ist dann von Vorteil, wenn die Deckschicht transparent ist.

In besonderen Formen, in denen die Informationsschicht mit Vorteil zugleich die Deckschicht ist, ist auch diese in vorteilhafter Weise präg- oder bedruckbar.

Ein weiterer Aspekt der Erfindung betrifft einen Gliedermassstab mit einer Mehrzahl gelenkig miteinander verbundener Massstabgliedern nach einem der Ansprüche 1 bis 12. Nachdem die einzelnen Massstabglieder eine Biegesteifigkeit besitzen, welche der eines Holzmassstabglieds gleichkommt, besitzt auch der erfindungsgemässe Gliedermassstab eine Biegesteifigkeit, welche mit der eines Gliedermassstabs aus Holz gleichkommt.

Noch ein Aspekt der Erfindung betrifft ein Verfahren zur Herstellung eines Massstabgliedes aus thermoplastischem Kunststoff gemäss Oberbegriff von Anspruch 15, welches dadurch gekennzeichnet ist, dass zur Verbesserung der Biegesteifigkeit eine in Längsrichtung verlaufende Faserverstärkung mit Fasern einer Mindestlänge von wenigstens 15 mm in Gestalt von Lagen vor dem Spritzen einer Spritzgussform zugeführt wird und die Lagen durch eine Kernschicht aus Kunststoff miteinander verbunden werden. Die Massstabglieder lassen sich daher vollautomatisch und rasch herstellen, indem Kunststoff in eine Form gespritzt wird und das Massstabglied anschliessend entformt wird.

Mit Vorteil sind die Kunststoffe für das Füllmaterial zur Herstellung der Kernschicht durch Kurzschnitt-Fasern verstärkt. Alternativ können auch geeignete unverstärkte Kunststoffe als Füllmaterial eingesetzt werden. Die in Längsrichtung verlaufende Faserverstärkung der Deckschichten wird vorzugsweise vor dem Spritzen der Kunststoffe der Spritzgussform zugeführt oder vorgefertigt in diese eingelegt. Die vorgefertigten Deckschichten werden vorzugsweise vorab in den Abmessungen eines Masstabglieds aus Plattenware des entsprechenden Materials ausgeschnitten. Das Zuführen der Faserverstärkung der Deckschicht und das Einlegen der Faserverstärkung in die Spritzgussform können automatisiert erfolgen.

Das Verfahren zur Herstellung der Massstabglieder kann demzufolge äusserst wirtschaftlich durchgeführt werden.

Nachfolgend wird d_ie Erfindung unter Bezugnahme auf die Figuren beispielhaft erläutert. Es zeigt in schematischer Darstellung:
- Figur 1: eine Draufsicht auf ein erfindungsgemässes Massstabglied,
- Figur 2: eine Frontansicht des Massstabglieds aus Figur 1,
- Figur 3: einen Längsschnitt durch das Massstabglied,
- Figur 4: eine perspektivische Ansicht des Massstabglieds, bei welcher eine erste Flachseite einsehbar ist,
- Figur 5: eine perspektivische Ansicht des Massstabglieds, bei welcher eine zweite Flachseite einsehbar ist,
- Figur 6: zwei perspektivische Ansichten eines Massstabglieds, welches bei einem erfindungsgemässen Gliedermassstab als Anfangs- bzw. Endglied eingesetzt ist,
- Figur 7: eine Frontansicht zweier miteinander verbundener Massstabglieder,
- Figur 8: eine Detailansicht der Verbindung zweier benachbarter Massstabglieder aus Figur 7 in Schnittdarstellung und
- Figur 9: eine Darstellung eines in den Deckschichten verwendeten Rovinggewebes.

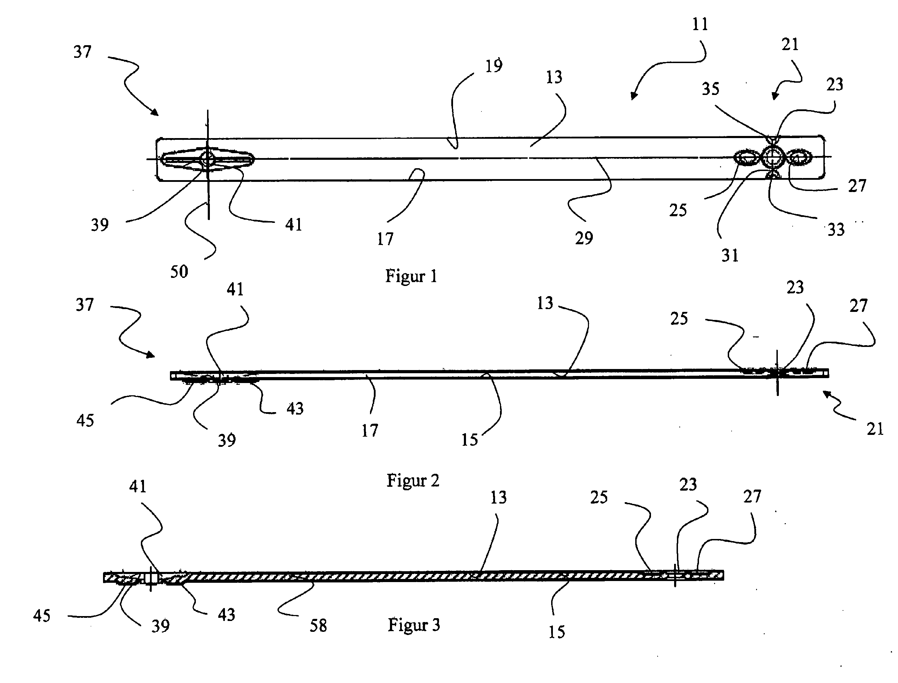

Die Figuren 1 bis 5 zeigen beispielhaft ein Massstabglied 11 mit zwei sich gegenüberliegenden ersten und zweiten Flachseiten 13,15. Zwischen den Flachseiten 13,15 befinden sich eine erste und zweite Schmalseite 17,19. In kurzem Abstand zu einem ersten Ende 21 des Massstabglieds 11 ist eine erste Öffnung 23 vorgesehen, welche sich zwischen der ersten und zweiten Flachseite 13,15 erstreckt. Die Öffnung 23 ist zwischen einer ersten und zweiten geometrischen Vertiefung 25,27 vorgesehen, die entlang der Längsachse 29 des Massstabglieds 11 orientiert sind. Die Vertiefungen 25,27 sind auf der ersten Flachseite 13 vorgesehen.

Auf einer ersten Querachse 31, welche orthogonal zur Längsachse 29 ist und durch den Mittelpunkt der Öffnung 23 verläuft, sind zwei sich gegenüberliegende ovale Vertiefungen 33,35 vorgesehen. Die Vertiefungen 33,35 tangieren die Öffnung 23 und sind zu den Schmalseiten 17 bzw. 19 hin offen.

In kurzem Abstand zu einem zweiten Ende 37 des Massstabglieds 11 ist eine längliche Vertiefung 39 auf der ersten Flachseite 13 vorgesehen, welche sich entlang der Längsachse 29 erstreckt. Die Tiefe der länglichen Vertiefung 39 nimmt zum Zentrum der Vertiefung 39 hin zu (Figur 3). In der länglichen Vertiefung 39 ist zentral eine zweite Öffnung 41 vorgesehen.

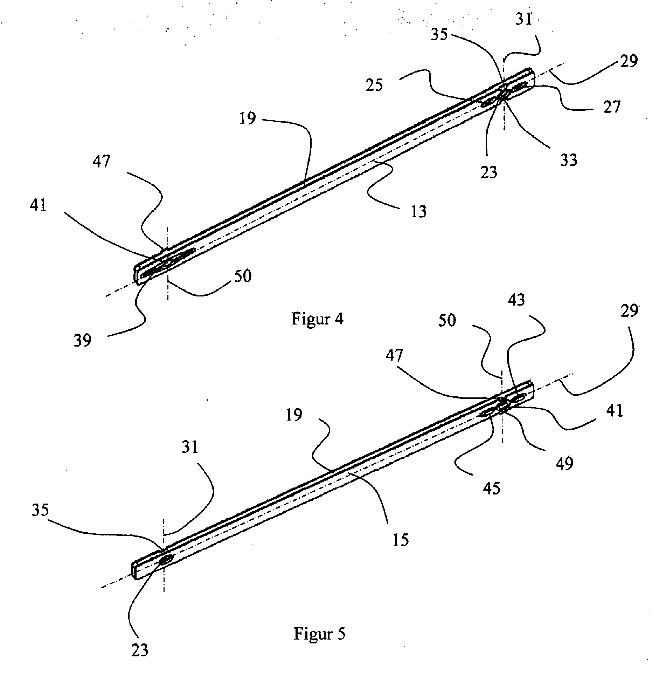

Figur 5 zeigt, dass genau gegenüber der länglichen Vertiefung 39 an der zweiten Flachseite 15 zwei ovale Noppen 43,45 und zwei ovale Noppen 47,49 komplementär zu den Vertiefungen 25,27,33,35 vorgesehen sind. Die ovalen Noppen 43,45 sind entlang der Längsachse 29 und die ovalen Noppen 47,49 entlang einer zweiten Querachse 50 orientiert. Zwischen den Noppen 43,45,47,49 ist die zweite Öffnung 41 zentral vorgesehen.

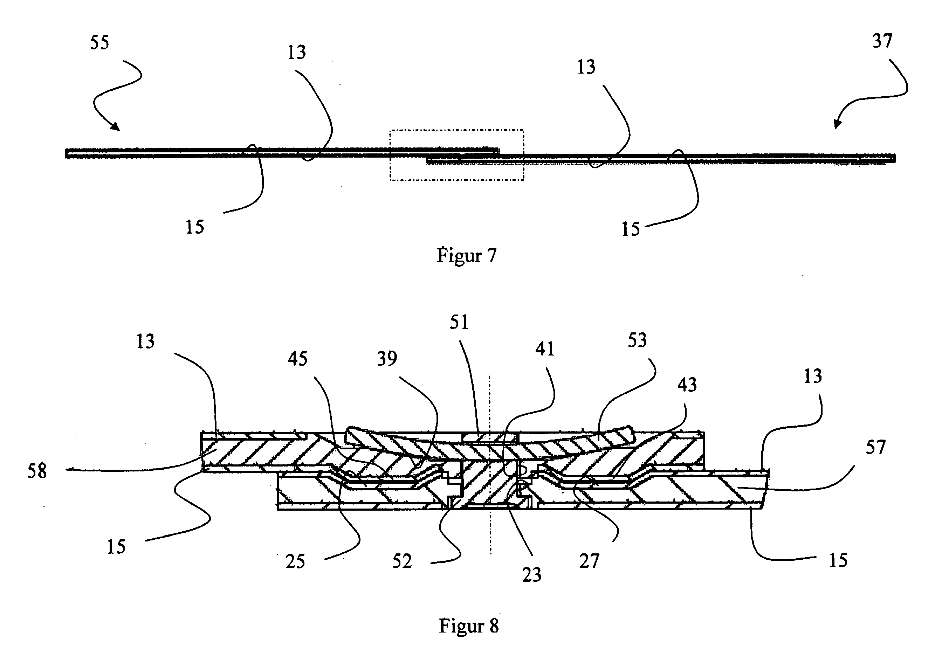

Die Noppen 43,45,47,49 sind derartig dimensioniert und an der zweiten Flachseite 15 angeordnet, dass sie mit den Vertiefungen 25,27,33,35 eines zweiten Massstabglieds 11 zusammenwirken können (Figur 7 und Figur 8). Zur Verbindung zweier Massstabglieder 11 ist durch die erste Öffnung 23 eines ersten Massstabglieds 11 und die zweite Öffnung 41 eines zweiten benachbarten Massstabglieds 11 ein Verbindungsbolzen 51 hindurchgeführt. An dem Verbindungsbolzen 51 ist in kurzem Abstand zu seinem ersten Ende eine Querbohrung zur Aufnahme eines federnden Verbindungsstifts 53 vorgesehen. Die erste Flachseite 13 eines ersten Massstabsglieds 11 und die zweite Flachseite 15 eines zweiten Massstabsglieds 11 sind zueinander orientiert. Der Stift 53 ist in der länglichen Vertiefung 39 federnd aufgenommen. An dem zweiten Ende des Verbindungsbolzens 51 ist ein Bund 52 vorgesehen, durch die die benachbarten Massstabglieder 11 aneinander gehalten sind. Dadurch sind zwei Massstabglieder 11 über den Verbindungsbolzen 51 verdrehbar miteinander verbunden.

Damit der Abstand zwischen der ersten Flachseite 13 eines ersten Massstabglieds 11 und der zweiten Flachseite 15 eines zweiten Massstabglieds 11 während einer Verdrehung zweier Massstabglieder 11 relativ zueinander flexibel ist, ist der Verbindungsbolzen 51 durch den Stift 53 vorgespannt (Figur 8). Durch den Stift 53 wird der Verbindungsbolzen 51 wieder in die Ausgangslage vorgespannt, wenn die Noppen 43,45,47,49 eines ersten Massstabglieds 11 und die Vertiefungen 25,27,33,35 eines zweiten Massstabglieds 11 zueinander in Wirkverbindung stehen.

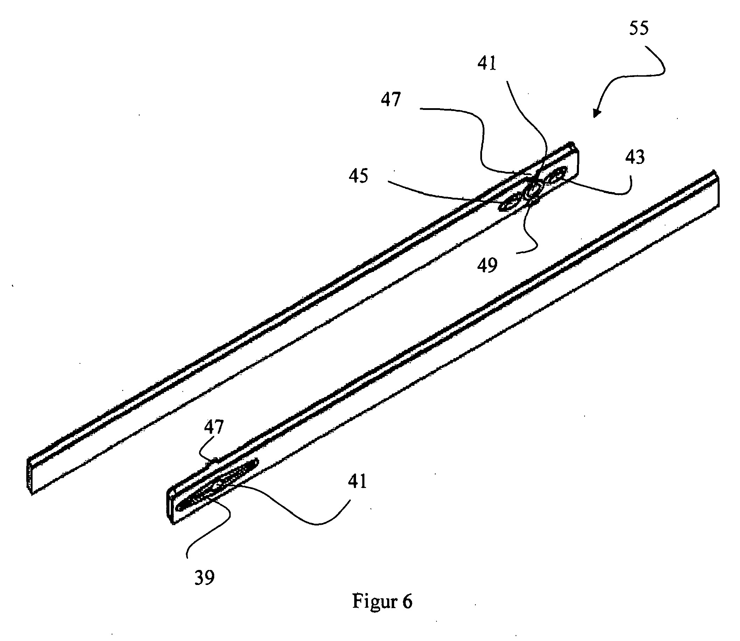

Zuerst liegt eine Mehrzahl von eingeklappten Massstabgliedern 11 bei einem Gliedermassstab übereinander. Der Gliedermassstab hat die Länge eines Massstabglieds 11. Die Enden eines Gliedermassstabs sind durch Anfangs- bzw. Endglieder 55 gebildet, welche etwas kürzer als die übrigen Massstabglieder 11 sind (Figur 6). Solche Glieder 55 besitzen Noppen 43,45,47,49 oder Vertiefungen 25,27,33,35 nur an einem Ende, je nach dem, ob an dem an das Anfangs- resp. Endglied 55 anschliessenden Massstabglied 11 an seinem dem zum Anfangs- resp. Endglied 55 hin orientierten Ende Noppen 43,45,47,49 oder Vertiefungen 25,27,33,35 vorgesehen sind.

Beim Ausklappen der Massstabglieder 11 rasten die Noppen 47,49 eines Massstabglieds 11 zuerst in den ovalen Vertiefungen 25,27 des benachbarten Massstabglieds 11 ein. In dieser Stellung stehen zwei benachbarte Massstabglieder 11 orthogonal zueinander und sind vierfach gehalten. Diese Stellung ist nützlich, wenn z. B. ein rechter Winkel angezeichnet werden soll.

Damit zwei benachbarte Massstabglieder 11 in der vollständig ausgeklappten Stellung zueinander zuverlässig fixiert sind, rasten die Noppen 43,45,47,49 des ersten Massstabglieds 11 in die Vertiefungen 25,27,33,35 des zweiten Massstabglieds 11. In dieser Stellung sind benachbarte Massstabglieder 11 ebenfalls vierfach gehalten (Figur 8).

Damit die Biegung der einzelnen Massstabglieder 11 entlang seiner Längsachse im ausgeklappten Zustand eines Gliedermassstabs verringert ist, sind die Massstabglieder 11 in einer 3-Schicht Verbundstruktur aufgebaut. Die Massstabglieder 11 sind vorzugsweise schaumspritzgegossen. In einer bevorzugten Ausführungsform besitzt ein Massstabglied 11 Aussenabmessungen von 236 x 15 x 3,3 mm.

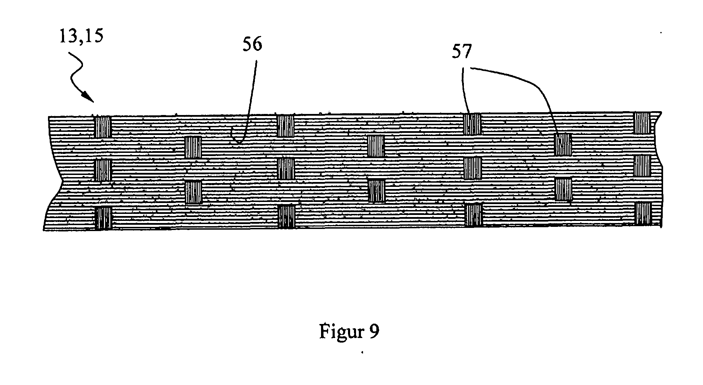

Die Flachseiten 13,15 eines Massstabglieds 11 sind als faserverstärkte Deckschichten 13,15 ausgeführt. Als Deckschichten kommen vorzugsweise sogenannte Organobleche zum Einsatz. Die vorliegend eingesetzten Organobleche sind Faserverbundwerkstoffe aus einer Matrix, vorzugsweise einem thermoplastischen Kunststoff, und einer mehrheitlich unidirektionalen Faserschicht. Die Faserschicht kann auch in Gestalt eines Rovinggewebes ausgeführt sein, welches in die Matrix eingebettet ist. Die sehr guten Zugfestigkeiten des Rovinggewebes sind in synergistischer Weise mit den verbindenden und druckaufnehmenden Eigenschaften der Matrix verknüpft. Die Organobleche sind in ihrer Dimensionierung bezüglich Matrixdicke, Faserlänge, Faserausrichtung und der verwendeten Materialien an die auftretenden Belastungen bei einem Massstabglied massgeschneidert. Ferner sind die verwendeten Organobleche einfach zuschneidbar und die Noppen 25,27,33,35 und Vertiefungen 43,45,47,49 sind in diese einprägbar bzw. frei zu stellen. Figur 9 zeigt den Aufbau des Rovinggewebes der Deckschichten 13,15. Das Rovinggewebe besitzt Längsfasern 56 und Querfasern 57. Die Längsfasern 56 können dabei als Kettfäden betrachtet werden, wohingegen die Querfasern 57 die Schussfäden sind. Figur 9 zeigt auch, dass die Querfasern 57 nicht gleichmässig über die Länge der Deckschichten 13, 15 verteilt sind, sondern gebündelt sind.
Zwischen den Deckschichten 13,15 ist eine vorzugsweise mit Kunststofffasern verstärkte uns geschäumte Kernschicht 58 vorgesehen. Nicht näher dargestellte Informationsschichten können unter, innerhalb oder auf je einer der Deckschichten vorgesehen sein. Vorzugsweise sind die Informationsschichten jedoch auf den Deckschichten 13,15 angeordnet. Die Informationsschichten sind aus präg- oder bedruckbarem Kunststoff gefertigt. Denkbar ist es auch, dass die Deckschichten zugleich als Informationsschichten ausgebildet sind.

Die Erfindung beinhaltet zugleich ein Verfahren zur Herstellung des findungsgemässen Massstabgliedes aus faserverstärktem thermoplastischen Kunststoff gemäss den Ansprüchen 1 bis 12 mit Mehrschicht-Verbund-, beziehungsweise Integralschaum-Struktur durch Spritzgiessen oder Schaumspritzgiessen. Die Deckschichten 13,15 sind vorzugsweise vorgefertigt, indem diese in der Länge und Breite eines Masstabglieds 11 aus einem Organoblech ausgeschnitten werden. Anschliessend werden die Deckschichten in eine Form eingelegt und die Form mit Kunststoff ausgespritzt.

Ausführungsbeispiel des Aufbaus eines Massstabglieds 11:
- Deckschichten: Glasfaserverstärkter Polypropylen Kunststoff, 47 Vol._% Faseranteil, volumenmässiger Faseranteil auf 80 Vol% in Längsrichtung (Rovingstränge) und auf 20 Vol% in Querrichtung verteilt.
- Kernschicht: Spritzgussgeschäumter Polypropylen Kunststoff, glasfaserverstärkt, 20 Gew.% Kurzschnittfasern.
- Informationschicht: Im Heissprägeverfahren oder im Druckverfahren auf die Deckschichten aufgebracht.

Zusammenfassend kann folgendes festgehalten werden: Es wird ein Massstabglied aus thermoplastischem faserverstärkten Kunststoff mit Mehrschicht-Verbund- bzw. Integralschaum-Struktur und ein Verfahren zu seiner Herstellung angeboten. Das Massstabglied besitzt eine Kernschicht und zwei Deckschichten und wahlweise mindestens eine Informationsschicht. Mindestens in den Deckschichten ist ein bevorzugt mehrheitlich unidirektionales Fasergewebe oder in Längsrichtung ausgerichtete Rovingstränge eingearbeitet.

### Legende:

- 11: Massstabglied
- 13: Erste Flachseite, erste Deckschicht
- 15: Zweite Flachseite, zweite Deckschicht
- 17: Erste Schmalseite
- 19: Zweite Schmalseite
- 21: Erstes Ende
- 23: Erste Öffnung
- 25: Erste ovale Vertiefungen
- 27: Zweite ovale Vertiefung
- 29: Längsachse
- 31: Erste Querachse
- 33,35: Halbkreisförmige Vertiefungen
- 37: Zweites Ende
- 39: Längliche Vertiefung
- 41: Zweite Öffnung
- 43,45: Ovale Noppen
- 47,49: Halbkreisförmige Noppen
- 50: Zweite Querachse
- 51: Verbindungsstift
- 52: Bund
- 53: Biegefederelement
- 55: Anfangs- bzw. Endglied
- 56: Längsfasern, Kettfäden
- 57: Fasern in Querrichtung, Schussfäden
- 58: Kernschicht

## Patentansprüche

1. Massstabglied (11) aus einer durch Spritzguss hergestellten Verbundstruktur oder Integral-Schaumstruktur aus thermoplastischem Kunststoff in der Form eines flachen Stabes und mit Mitteln (25,27,33,35,43,45,47,49) an wenigstens einem Ende des Massstabsglieds (11) zur gelenkigen Verbindung mit wenigstens einem weiteren Massstabglied (11),
**dadurch gekennzeichnet,**
**dass** zur Verbesserung der Biegesteifigkeit das Massstabglied (11) an den oder knapp unter den Oberflächen der Flachseiten des Massstabglieds (11) eine in Längsrichtung verlaufende Faserverstärkung mit Fasern einer Mindestlänge von wenigstens 15 mm in Gestalt von Lagen (13,15) aufweist, welche Lagen (13,15) zueinander beabstandet und durch eine Kernschicht (57) miteinander verbunden sind.

2. Massstabglied (11) nach Anspruch 1, **dadurch gekennzeichnet, dass** die Faserverstärkung durch ein bevorzugt mehrheitlich unidirektionales Fasergewebe oder durch in Längsrichtung ausgerichtete Rovingstränge gebildet ist.

3. Massstabglied (11) nach Anspruch 1 oder 2, **dadurch gekennzeichnet, dass** die Länge der in Längsrichtung orientierten Fasern länger als die Breite des Massstabsglieds, vorzugsweise mindestens 30% und besonders bevorzugt 90% der Länge des Massstabglieds aufweisen.

4. Massstabglied (11) nach einem der Ansprüche 1 bis 3, **dadurch gekennzeichnet, dass** der thermoplastische Kunststoff Polypropylen oder ein Kunststoff der Gruppe Polyester, Polyamide, deren Copolymere, Polycarbonat, Polystyrol oder Polypropylen ist.

5. Massstabglied (11) nach einem der Ansprüche 1 bis 4, **dadurch gekennzeichnet, dass** zwischen den Lagen (13,15) eine Kernschicht (57) vorgesehen ist, wobei der in den Lagen (13,15) und der Kernschicht verwendete thermoplastische Kunststoff der gleiche ist.

6. Massstabglied (11) nach den Ansprüchen 1 bis 5, **dadurch gekennzeichnet, dass** die Kernschicht (57) aus geschäumtem thermoplastischem Kunststoff besteht.

7. Massstabglied (11) nach den Ansprüchen 1 bis 6, **dadurch gekennzeichnet, dass** die Faserverstärkung der Lagen (13,15) aus Fasern aus der Gruppe der Glasfasern, Aramidfasern oder Carbonfasern sind.

8. Massstabglied (11) nach den Ansprüchen 1 bis 7, **dadurch gekennzeichnet, dass** vorgefertigte Lagen (13,15) eingesetzt sind, wobei der Anteil der Faserverstärkung in den Lagen (13,15) zwischen 20 und 80 Vol.-% und vorteilhaft zwischen 40 und 60 Vol.-% liegt.

9. Massstabglied (11) nach einem der Ansprüche 1 bis 8, **dadurch gekennzeichnet, dass** die Faserverstärkung der Lagen (13,15) zumindest teilweise aus Fasermaterialien bestehen, die in thermoplastischen Kunststoffen vorkonsolidiert sind und vorgefertigt sein können.

10. Massstabglied (11) nach einem der Ansprüche 1 bis 9, **dadurch gekennzeichnet, dass** der für die Herstellung der Kernschicht verwendete Kunststoff unverstärkt oder mit Kurzschnittfasern verstärkt ist.

11. Massstabglied (11) nach den Ansprüchen 1 bis 10, **dadurch gekennzeichnet, dass** die Kernschicht (57) mit Kurzschnittfasern einer Länge zwischen 1 und 3 mm, versetzt ist, wobei der gewichtmässige Anteil zwischen 0.1 bis 40 Gew. %, vorzugsweise zwischen 10 bis 30 Gew.% und besonders bevorzugt zwischen 15 bis 25 Gew.% liegt.

12. Massstabglied (11) nach Anspruch 1, **dadurch gekennzeichnet, dass** mindestens eine Informationsschicht auf je einer der Lagen (13,15) angeordnet ist.

13. Massstabglied (11) nach einem der Ansprüche 1 bis 12, **dadurch gekennzeichnet, dass** der volumenmässige Faseranteil der Deckschichten, welcher sich in Längsrichtung des Massstabglieds erstreckt, 65% bis 95%, bevorzugt 70% bis 90% und besonders bevorzugt 75% bis 85% des Gesamtfaservolumens der Langfasern in den Deckschichten beträgt.

14. Gliedermassstab mit einer Mehrzahl gelenkig miteinander verbundener Massstabgliedern (11) nach einem der Ansprüche 1 bis 12.

15. Verfahren zur Herstellung eines Massstabgliedes (11) aus thermoplastischem Kunststoff und einer Mehrschicht-Verbund- oder Integralschaumstruktur gemäss den Ansprüchen 1 bis 13 durch Spritzgiessen oder durch Schaumspritzgiessen , **dadurch gekennzeichnet, dass** zur Verbesserung der Biegesteifigkeit eine in Längsrichtung verlaufende Faserverstärkung mit Fasern einer Mindestlänge von wenigstens 15 mm in Gestalt von Lagen (13,15) vor dem Spritzen einer Spritzgussform zugeführt wird und die Lagen (13,15) durch eine Kernschicht (57) aus Kunststoff miteinander verbunden werden.

16. Verfahren gemäss Anspruch 15, **dadurch gekennzeichnet, dass** die Kunststoffe für das Füllmaterial vor dem Spritzen mit Kurzschnitt-Fasern versetzt werden.

17. Verfahren gemäss Anspruch 15, **dadurch gekennzeichnet, dass** vorgefertigte Lagen (13,15) in eine Spritzgussform eingelegt werden und mit Kunststoff ausgespritzt werden.

## Claims

1. Ruler element (11) made of a composite structure manufactured by injection moulding or of an integral foam structure made of thermoplastic synthetic material in the form of a flat bar and with means (25, 27, 33, 35, 43, 45, 47, 49) on at least one end of the ruler element (11) for the articulated connection with at least one further ruler element (11),
**characterized in**
**that**, for improving the resistance against bending, the ruler element (11) has on or just under the surfaces of the flat sides of the ruler element (11) a fiber reinforcement in longitudinal direction with fibers with a minimal length of at least 15 mm configured as layers (13, 15), which layers (13, 15) are spaced from each other and are connected with each other by a core layer (57).

2. Ruler element (11) according to claim 1, **characterized in that** the fiber reinforcement is formed by a preferably mainly unidirectional fiber fabric or by roving strands orientated in longitudinal direction.

3. Ruler element (11) according to claim 1 or 2, **characterized in that** the length of the fibers orientated in longitudinal direction is longer than the width of the ruler element, that they have preferably at least 30 % and particularly preferably 90 % of the length of the ruler element.

4. Ruler element (11) according to any of the claims 1 to 3, **characterized in that** the thermoplastic synthetic material is polypropylene or a synthetic material of the group polyester, polyamide, the copolymers thereof, polycarbonate, polystyrene or polypropylene.

5. Ruler element (11) according to any of the claims 1 to 4, **characterized in that** a core layer (57) is provided between the layers (13, 15), whereby the thermoplastic synthetic material used in the layers (13, 15) and the core layer is the same.

6. Ruler element (11) according to the claims 1 to 5, **characterized in that** the core layer (57) is made of foamed thermoplastic synthetic material.

7. Ruler element (11) according to the claims 1 to 6, **characterized in that** the fiber reinforcement of the layers (13, 15) is made of fibers of the group of the glass fibers, aramid fibers or carbon fibers.

8. Ruler element (11) according to the claims 1 to 7, **characterized in that** pre-manufactured layers (13, 15) are set in,whereby the proportion of the fiber reinforcement in the layers (13, 15) is in the range between 20 and 80 % percent by volume and advantageously between 40 and 60 percent by volume.

9. Ruler element (11) according to any of the claims 1 to 8, **characterized in that** the fiber reinforcement of the layers (13, 15) is made at least partially of fiber materials which are pre-consolidated in thermoplastic synthetic materials and which can be pre-manufactured.

10. Ruler element (11) according to any of the claims 1 to 9, **characterized in that** the synthetic material used for the manufacturing of the core layer is not reinforced or is reinforced with shortcut fibers.

11. Ruler element (11) according to the claims 1 to 10, **characterized in that** the core layer (57) is mixed to shortcut fibers with a length between 1 and 3 mm, whereby the proportion in terms of weight is between 0,1 and 40 weight percent, preferably between 10 and 30 weight percent and particularly preferably between 15 and 25 weight percent.

12. Ruler element (11) according to claim 1, **characterized in that** at least one information layer is placed on each of the layers (13, 15).

13. Ruler element (11) according to any of the claims 1 to 12, **characterized in that** the proportion of fibers in terms of volume of the covering layers that extends in longitudinal direction of the ruler element amounts to 65% to 95%, preferably to 70% to 90% and particularly preferably to 75% to 85% of the total fiber volume of the long fibers in the covering layers.

14. Ruler with elements with a plurality of ruler elements (11) articulately connected to each other according to any of the claims 1 to 12.

15. Method for manufacturing a ruler element (11) made of thermoplastic synthetic material and a multiple layer composite or integral foam structure according to the claims 1 to 13 by injection moulding or by foam injection moulding, **characterized in that**, for improving the resistance against bending, a fiber reinforcement in longitudinal direction with fibers with a minimal length of at least 15 mm configured as layers (13, 15) is supplied to an injection mould before injection and the layers (13, 15) are connected with each other by a core layer (57) made of synthetic material.

16. Method according to claim 15, **characterized in that** the synthetic materials for the filling material are mixed with shortcut fibers before injection.

17. Method according to claim 15, **characterized in that** prefabricated layers (13, 15) are put into an injection mould and are injected with a synthetic material.

## Revendications

1. Elément de règle graduée (11) en une structure composite fabriquée par moulage par injection ou en une structure en mousse intégrale en matière synthétique thermoplastique en forme de barre plate et avec des moyens (25, 27, 33, 35, 43, 45, 47, 49) à au moins une extrémité de l'élément de règle graduée (11) pour la liaison articulée avec au moins un autre élément de règle graduée (11),
**caractérisé en ce**
**que**, pour améliorer la rigidité à la flexion, l'élément de règle graduée (11) présente, sur ou juste sous les surfaces des côtés plats de l'élément de règle graduée (11), un renforcement en fibres dans le sens longitudinal avec des fibres d'une longueur minimale d'au moins 15 mm configurées en couches (13, 15), lesquelles couches (13, 15) sont espacées l'une de l'autre et reliées l'une à l'autre par une couche de noyau (57).

2. Elément de règle graduée (11) selon la revendication 1, **caractérisé en ce que** le renforcement en fibres est formé par un tissu en fibres de préférence majoritairement unidirectionnel ou par des tronçons de stratifils orientés dans le sens longitudinal.

3. Elément de règle graduée (11) selon la revendication 1 ou 2, **caractérisé en ce que** la longueur des fibres orientées dans le sens longitudinal est plus longue que la largeur de l'élément de règle graduée et qu'elles présentent de préférence au moins 30% et de manière particulièrement préférée 90% de la longueur de l'élément de règle graduée.

4. Elément de règle graduée (11) selon l'une des revendications 1 à 3, **caractérisé en ce que** la matière synthétique thermoplastique est le polypropylène ou une matière synthétique du groupe polyester, polyamide, leurs copolymères, le polycarbonate, le polystyrène ou le polypropylène.

5. Elément de règle graduée (11) selon l'une des revendications 1 à 4, **caractérisé en ce qu'**il est prévu une couche de noyau (57) entre les couches (13, 15), la matière synthétique thermoplastique utilisée dans les couches (13, 15) et la couche de noyau étant la même.

6. Elément de règle graduée (11) selon les revendications 1 à 5, **caractérisé en ce que** la couche de noyau (57) est constituée par une matière synthétique thermoplastique expansée.

7. Elément de règle graduée (11) selon les revendications 1 à 6, **caractérisé en ce que** le renforcement en fibres des couches (13, 15) est en fibres du groupe des fibres de verre, des fibres d'aramide ou des fibres de carbone.

8. Elément de règle graduée (11) selon les revendications 1 à 7, **caractérisé en ce que** des couches préfabriquées (13, 15) sont mises en place, la proportion du renforcement en fibres dans les couches (13, 15) se situant entre 20 et 80 % en volume et de manière avantageuse entre 40 et 60 % en volume.

9. Elément de règle graduée (11) selon l'une des revendications 1 à 8, **caractérisé en ce que** le renforcement en fibres des couches (13, 15) est constitué au moins partiellement par des matériaux de fibres qui sont préconsolidés dans des matières synthétiques thermoplastiques et qui peuvent être préfabriqués.

10. Elément de règle graduée (11) selon l'une des revendications 1 à 9, **caractérisé en ce que** la matière plastique utilisée pour la fabrication de la couche de noyau est non renforcée ou renforcée par des fibres courtes.

11. Elément de règle graduée (11) selon l'une des revendications 1 à 10, **caractérisé en ce que** la couche de noyau (57) est mélangée à des fibres courtes d'une longueur entre 1 et 3 mm, la proportion en poids se situant entre 0,1 et 40 % en poids, de préférence entre 10 et 30 % en poids et de manière particulièrement préférée entre 15 et 25 % en poids.

12. Elément de règle graduée (11) selon la revendication 1, **caractérisé en ce qu'**au moins une couche d'information est placée sur chacune des couches (13, 15).

13. Elément de règle graduée (11) selon l'une des revendications 1 à 12, **caractérisé en ce que** la proportion en fibres en volume des couches de recouvrement qui s'étend dans le sens longitudinal de l'élément de règle graduée est de 65 % à 95 %, de manière préférée de 70 % à 90 % et de manière particulièrement préférée de 75 % à 85 % du volume total des fibres longues dans les couches de recouvrement.

14. Règle graduéeà éléments avec une pluralité d'éléments de règle graduée (11) reliés de manière articulée l'un à l'autre selon l'une des revendications 1 à 12.

15. Procédé de fabrication d'un élément de règle graduée (11) en matière synthétique thermoplastique et en une structure composite multicouches ou une structure en mousse intégrale selon les revendications 1 à 13 par moulage par injection ou par moulage par injection de mousse, **caractérisé en ce que**, pour améliorer la rigidité à la flexion, un renforcement en fibres dans le sens longitudinal avec des fibres d'une longueur minimale d'au moins 15 mm configurées comme des couches (13, 15) est amené avant l'injection à un moule pour injection et les couches (13, 15) sont reliées l'une à l'autre par une couche de noyau (57) en matière synthétique.

16. Procédé selon la revendication 15, **caractérisé en ce que** les matières synthétiques pour le matériau de remplissage sont mélangées avant injection à des fibres courtes.

17. Procédé selon la revendication 15, **caractérisé en ce que** des couches préfabriquées (13, 15) sont insérées dans un moule à injection et sont injectées avec la matière synthétique.
